# EUROPÄISCHE PATENTSCHRIFT

(11) **EP 0 685 195 B1**
(45) Veröffentlichungstag und Bekanntmachung des Hinweises auf die Patenterteilung: **30.07.1997**
(21) Anmeldenummer: 95111320.8
(22) Anmeldetag: 09.09.1992
(51) Int. Cl.: A47J 31/10, A47J 31/46, A47J 31/06

(54) **Brühgetränkemaschine**
Brewing machine
Machine à faire des infusions

(30) Priorität: 13.09.1991 DE 4130446
(43) Veröffentlichungstag der Anmeldung: 06.12.1995
(62) Teilanmeldung aus: 92918782.1
(73) Patentinhaber: Braun Aktiengesellschaft, Frankfurt am Main (DE)
(72) Erfinder: Weller, Albrecht, Dr., D-61449 Steinbach (DE); Driesen, Georges, Dr., D-61276 Weilrod (DE); Peter, Andreas, D-61476 Kronberg (DE); Herber, Peter, D-60318 Frankfurt am Main (DE); Schäfer, Gerhard, D-60437 Frankfurt am Main (DE); Schamberg, Stefan, D-61250 Usingen (DE); Birk, Andreas, D-61350 Bad Homburg (DE)

(56) Entgegenhaltungen:
- DE-A- 2 714 736
- DE-A- 2 821 996
- US-A- 4 056 050
- US-A- 4 064 795

## Beschreibung

Die Erfindung betrifft eine Brühgetränkemaschine nach dem Oberbegriff des Patentanspruchs 1.

Bei Brühgetränkemaschinen gemäß dem Oberbegriff des Patentanspruchs 1 kann Wasser von einer elektrischen Heizeinrichtung erhitzt werden und über ein Auslaßventil, welches erst bei Erreichen einer bestimmten Wassertemperatur seine Offenstellung einnimmt, aus dem Vorratsbehälter in eine eine Zutat, vorzugsweise Kaffeemehl oder Teeblätter, enthaltende Aufbrüheinheit abfließen, aus der es nach Extrahierung der Zutat schließlich als Brühgetränk einem Auffangbehälter zugeführt wird. Die Brühgetränkemaschine weist darüber hinaus eine Leitung auf, über die Brühwasser auch über anderen einen Weg als über die obere Fläche der Zutat aus dem Vorratsbehälter in den Auffangbehälter gelangen kann.

Eine Brühgetränkemaschine ist beispielsweise aus der DE-A-27 14 736 bekannt, bei der zur Aroma- bzw. Stärkebeeinflussung bei der Teezubereitung ein Zeitschalter vorgesehen ist, der ein Ventil zeitabhängig steuert, so daß, wenn eine bestimmte Menge an Brühwasser in das Sieb eingeflossen ist, dieser Weg versperrt wird und Brühwasser nur noch auf anderem Weg, d.h. hier am Sieb vorbei direkt in den Auffangbehälter einfließt. Durch Vorgabe der Menge an Zutaten und der Menge an verwendetem Wasser kann die gewünschte Stärke des zubereiteten Brühgetränks eingestellt werden, d. h., die Brühzeit, auf die die Vorrichtung eingestellt ist, ist für eine verwendete Zutat spezifisch und muß genau beachtet werden, weil im Falle einer zu kurz gewählten Brühzeit das Getränk nicht das richtige Aroma erhält, während es im Falle einer zulangen Brühzeit einen bitteren Geschmack aufweist.

Weiterhin ist aus der EP-0 079 235 B1 eine Kaffeemaschine bekannt, bei der der Brühvorgang dadurch erfolgt, daß aus einem Vorratsbehälter kaltes Wasser in einen Durchlauferhitzer einfließt, dort erhitzt und das dabei entstehende Brühwasser über eine Steigleitung einem Brühkopf zugeführt wird, aus dem es in eine eine Zutat, vorzugsweise Kaffeemehl, enthaltende Aufbrüheinheit austritt, aus der das so hergestellte Brühgetränk schließlich in einen Auffangbehälter abfließt. Auch bei dieser Kaffeemaschine ist eine Ventileinrichtung vorgesehen, die entweder von Hand oder durch elektronische Bauteile steuerbar ist, so daß nach einer vorgebbaren Brühzeit, bei der Brühwasser nur über die obere Fläche des Kaffeemehls in den Auffangbehälter gelangen kann, das Brühwasser auch auf anderem Wege, nämlich über einen sogenannten Bypass-Kanal, in den Auffangbehälter abfließt.

Sinn der Umleitung des Brühwasers nach Ablauf einer bestimmten Brühzeit ist es, den Geschmack des Brühgetränks positiv zu beeinflußen. So ist es vor allem aus der Zubereitung von Kaffee bekannt, daß eine zu lange Kontaktzeit zwischen Brühwasser und Kaffeemehl aus dem Kaffeemehl unerwünschte ätherische Öle, Bitterstoffe, etc. ausschwemmt. Die genannten Stoffe greifen neben ihrer Geschmacksbeeinträchtigung auch den Magen an und sind auch dafür verantwortlich, daß der Kaffee beim Abkühlen in der Tasse oder beim zu lange Warmhalten auf einer Warmhalteplatte im Geschmack regelrecht umkippt, d.h. es entsteht eine chemische Reaktion, die sogar durch das Trübewerden des Kaffees angezeigt wird. Aufgrund des Zusammenhangs zwischen Kontaktzeit und der Ausschwemmung unerwünschter Substanzen aus dem Kaffeemehl verschärft sich die geschilderte Problematik umso mehr, je mehr Tassen des Brühgetränks dadurch aufgebrüht, daß sein Brühwasser über die obere Fläche der Zutat geleitet wird. Beide vorbekannten Brühgetränkemaschinen wirken der beschriebenen Auslösung von Substanzen dadurch entgegen, nach Ablauf einer bestimmten Brühzeit, die gleichbedeutend ist mit der Kontaktzeit von Brühwasser und Zutat, weiteres Brühwasser auf anderem Wege in den Auffangbehälter gelangen zu lassen. Auf diese Weise kommt es zu einer wesentlich geringeren Auslösung von unerwünschten Substanzen aus der Zutat. Selbstverständlich ist die Menge der Zutat auf die genannte Brühwassermenge unter Berücksichtigung des persönlichen Geschmacks des Benutzers der Brühgetränkemaschine abzustimmen.

Beide vorgenannten Brühgetränkemaschinen haben den Nachteil, daß sie aufwendige Ventileinrichtungen enthalten, sei es, daß diese von Hand oder elektronisch betätigt werden, die verhältnismäßig teuer und aufwendig sind. Darüber hinaus enthalten beide Brühgetränkemaschinen bewegliche Teile, die verschmutzungsbedingt festsitzen oder auch aus anderen Gründen ausfallen können.

Aus der US 4,056,050 ist eine gattungsgemäße Brühgetränkemaschine bekannt, die eine auf ihre Aufbrüheinheit aufsetzbare und nach oben offene Verteilereinrichtung aufweist, aus der sowohl Brühwasser über die Oberfläche der Zutat als auch auf anderem Wege in den Auffangbehälter gelangt. Die Verteilereinrichtung besteht im wesentlichen aus einer Haupt- und Nebenkammer, wobei sämtliches vom Durchlauferhitzer über die Steigleitung geförderte Brühwasser über die Hauptkammer eintritt, dort nach Überwindung einer im Durchfluß steuerbaren Ventileinrichtung auf die Zutat abfließt. Ebenso kann das Brühwasser aus der Hauptkammer nach Überwindung einer Wand auch in die Nebenkammer einfließen. Von der Hauptkammer abfließendes Brühwasser trifft auf die Zutat, während aus der Nebenkammer abfließendes Brühwasser ohne Kontaktierung der Zutat direkt in den Auffangbehälter abfließt. Durch die offene Bauweise der Verteilereinrichtung und aufgrund der durch die Bauweise der Ventileinrichtung bedingten Verlangsamung der Strömung des Brühwassers wird letzteres vor seinem Kontakt mit der Zutat bereits merklich abgekühlt. Diese Abkühlung führt zum einen zu einer geringeren Ausnutzung des Kaffeemehls und zum anderen zu einer Verminderung der Qualität des Brühgetränks in Bezug auf Geschmack und Aroma.

Aufgabe der Erfindung ist es daher, eine Brühgetränkemaschine zu schaffen, bei der bei der Herstellung größerer Mengen eines Brühgetränks die Kontaktzeit zwischen Brühwasser und Zutat durch Umleitung von Brühwasser nicht mehr entsprechend der Brühgetränkemenge zunimmt sondern von einer bestimmten Wassermenge an ein Teil des gesamten Restwassers direkt in den Auffangbehälter fließt, ohne dabei mit der Zutat in Kontakt zu gelangen.

Diese Aufgabe wird für eine Brühgetränkemaschine nach Anspruch 1 dadurch gelöst, daß die Leitung einen durch die Lage ihres Scheitelpunktes (23) und ihres freien Endes (19) gekennzeichneten siphonartigen Verlauf aufweist, daß der Scheitelpunkt der Leitung so weit oberhalb des Bodens des Vorratsbehälters liegt, daß erst ab einem bestimmten Füllstand im Vorratsbehälter Brühwasser auch über die Leitung und nicht nur über das Auslaßrohr abfließt. Wird nur soviel Wasser in den von einer elektrischen Heizeinrichtung beheizten Vorratsbehälter eingegeben, daß der Scheitelpunkt der Leitung überhaupt nicht erreicht wird, so fließt die gesamte erhitzte Wassermenge direkt auf das Kaffeemehl in die Filtereinrichtung. Dabei hat sich in der Praxis herausgestellt, daß der optimale Scheitelpunkt der Leitung etwa einer Tassenzahl von drei Tassen entspricht.

Steht das Brühwasser über dem Scheitelpunkt der Leitung, so läuft ein gewisser Anteil davon, wenn das Auslaßventil geöffnet hat, nicht durch die obere Fläche des Kaffeemehls in die Filtereinrichtung, sondern es wird über den anderen Weg, nämlich einer als Bypass wirkender Leitung, in den Auffangbehälter geleitet.

Wie groß der Anteil von Brühwasser ist, der über den Bypass in den Auffangbehälter fließt, hängt von dem Durchlaßquerschnitt der siphonartigen Leitung ab. Auch die Menge, die über das Auslaßrohr direkt in die Filtereinrichtung einfließt, ist über den Auslaßrohrquerschnitt bestimmbar. Durch die richtige Auswahl von Auslaßrohrquerschnitt, Siphonquerschnitt und maximalem Scheitelpunkt der Leitung kann beispielsweise eine Kaffeemaschine gebaut werden, bei der sowohl bei einer geringeren wie auch höheren Anzahl von Tassen immer noch ein optimales Kaffeegetränk hergestellt wird. Dieses weist dabei sowohl ein hohes Aroma und eine gute Färbung, aber nur wenig Bitterstoffe auf, und dies bei großer Ausnutzung des Kaffeemehls.

Um bei Brühgetränkemaschinen verschiedener Kapazität stets einen aromatischen, aber nicht bitteren Kaffee zu erhalten, ist es vorteilhaft, wenn bei einer Brühgetränkemaschine, die maximal beispielsweise 12 Tassen Kaffee aufbereiten kann, die Durchlaßquerschnitte von Auslaßrohr und Leitung größer sind, als bei einer Brühgetränkemaschine, die nur maximal 6 Tassen herstellen kann. In gleicher Weise ist selbstverständlich auch die Höhe des Scheitelpunkts der Leitung an die Kapazität der Brühgetränkemaschine anzupassen.

Durch die Leitung wird auch erreicht, daß, wenn beispielsweise 12 Tassen Kaffee zubereitet werden sollen, nur ein Teil der 12 Tassen das Kaffeemehl direkt passiert, während ein gewisser Anteil an Brühwasser über die Leitung an der Filtereinheit vorbei in die Aufbrüheinheit fließt. Hierdurch ergibt sich der Vorteil, daß die Filtereinheit und somit ein dort eingelegter Papierfilter gegenüber herkömmlichen Kaffeemaschinen verkleinert werden kann, da die Stauhöhe im Papierfilter aufgrund des geringeren Durchflusses von Wasser durch das Kaffeemehl geringer geworden ist. Dadurch wird auch die Leertropfzeit des Filters erheblich verkürzt.

Um bei einer Kaffeemaschine, mit der zwar 12 Tassen, in den häufigsten Fällen im Mittel aber nur 6 Tassen, hergestellt werden, die Geschmacks- und Stärkebeeinflussung von Hand steuern zu können, ist es in einer Weiterbildung der Erfindung vorteilhaft, daß die siphonartige Leitung aus flexiblem Material besteht und ausreichend lang bemessen ist, so daß der Scheitelpunkt der Leitung in bezug auf den Boden des Vorratsbehälters vom Benutzer der Brühgetränkemaschine in verschiedene Höhen gebracht werden kann. Ein Benutzer kann also mit der höhenverstellbaren Anordnung der Leitung eine Geschmacksveränderung des Kaffees auf einfache Weise erreichen (Anspruch 2). Liegt nämlich der Scheitelpunkt der Leitung nahe dem Boden, so wird bereits sehr frühzeitig Brühwasser über die Leitung in den Auffangbehälter eingeleitet, so daß ein zwar starker, aber nicht im geringsten bitterer Kaffee zubereitet werden kann. Liegt hingegen der Scheitelpunkt der Leitung weiter vom Boden des Vorratsbehälters weg, so wird das Kaffeemehl insgesamt länger mit Brühwasser beaufschlagt, wobei aber nach wie vor mehr wohlschmeckende als bittere Geschmacksstoffe abgeben werden. Je höher also der Scheitelpunkt der Leitung liegt, desto bitterer wird bei gegebener Kaffeemenge der Kaffee.

Besonders vorteilhaft ist es, wenn erst ab ca. 20 % bis 40 % der maximal zulässigen Wassermenge im Vorratsbehälter auch Wasser über die Leitung läuft (Anspruch 3). Durch diese Anordnung wird garantiert, daß bei einer Zubereitung von geringen Mengen Kaffee, beispielsweise 3 Tassen, das ganze Brühwasser über die Brüheinrichtung fließt, so daß bei einem derartigen Aufbrühvorgang die siphonartigen Leitung gar nicht aktiviert wird. Der Kaffee wird also fast nicht verdünnt und hat deswegen hohe Konzentratwerte, die größer oder gleich 1,25 Gewichtsprozente sind. Bei einem 8-Tassen-Aufguß und 6,5 Gramm Kaffeemehl pro Tasse Kaffee wird der Kaffee ab ca. 1,25 Gew.-%-Konzentrat als stark bewertet. Für einen Aufguß von 4 oder mehr Tassen ist es deshalb sinnvoll, einen Teil des Brühwassers über die Leitung abzuzweigen, damit das Kaffeemehl gerade so lange mit heißem Wasser benetzt wird, als Bitterstoffe noch nicht aus dem Kaffeemehl gelöst werden.

Besonders gute Kaffeergebnisse werden dann erzielt, wenn der Durchlaßquerschnitt der siphonartigen Leitung gegenüber dem Gesamtdurchlaßquerschnitt aus Leitung und Auslaßrohr etwa zwischen 35 % und 50 %, vorzugsweise 45 %, beträgt (Anspruch 4). Der Durchlaßquerschnitt der siphonartigen Leitung ist damit zwar geringfügig kleiner als der Durchlaßquerschnitt des Auslaßrohres, was aber auch dann unbedingt erforderlich ist, wenn die Kapazität der Brühgetränkemaschine mehr als etwa 6 Tassen beträgt. Daß dies notwendig ist, ergibt sich aus folgendem: Da die siphonartige Leitung, wenn sie einmal aktiviert wurde, so lange wirkt, bis der gesamte Vorratsbehälter entleert ist, würde bei zu großem Durchlaßquerschnitt der siphonartigen Leitung zuviel Brühwasser in den Auffangbehälter abfließen, so daß entsprechend wenig Brühwasser direkt mit dem Kaffeemehl in Verbindung käme. Das Ergebnis wäre ein zu dünner Kaffee. Das nach der Weiterbildung der Erfindung angegebene Durchlaßquerschnittverhältnis stellt also letztendlich einen Mittelweg dar, so daß bei einer Kaffeezubereitung von 1 bis 12 Tassen ein annähernd gleichguter Kaffee ohne nennenswerte Bitterstoffe hergestellt werden kann.

Um die Kaffeequalität und den Kaffeegeschmack je nach Wunsch einer Bedienungsperson individuell einstellen zu können, ist es in einer Weiterbildung der Erfindung vorgesehen, daß die Leitung mit einer den Durchfluß des Brühwassers steuernden Ventileinrichtung versehen ist, die aber einen Mindestdurchfluß garantiert (Anspruch 5). Eine derartige Ventileinrichtung bietet sich insbesondere dann an, wenn eine Kaffeemaschine verwendet wird, deren Abweichung von der Mindest-bis zur Höchsttassenzahl besonders groß ist. In diesem Fall kann für eine bestimmte Tassenzahl die Ventileinrichtung so eingestellt werden, daß der Geschmack des Kaffees für einen Kaffeetrinker immer im optimalen Bereich liegt. Der Mindestdurchfluß an der Ventileinrichtung sollte dabei auf eine mittlere Tassenzahl eingestellt werden, so daß, wenn ausnahmsweise einmal mehr Tassen benötigt werden, eine Vergrößerung des Durchflußquerschnittes durch Betätigen der Ventileinrichtung möglich ist, wodurch der Durchfluß von Brühwasser durch das Kaffeemehl reduziert wird.

Dabei ist es besonders vorteilhaft, wenn die Ventileinrichtung vom Benutzer der Brühgetränkemaschine in solchen Grenzen verstellt werden kann, daß bei ausreichendem Füllstand nach der Öffnung des Auslaßventils 10 % bis 40 % des Brühwassers durch die siphonartige Leitung abfließen (Anspruch 6).

Damit, wenn Brühwasser über die Leitung in den Auffangbehälter abfließt, dieses auch noch ausreichend heiß in den Auffangbehälter abfließt, ist es vorteilhaft, daß die Leitung sich durch den Vorratsbehälter erstreckt (Anspruch 7). Durch diese Anordnung wird erreicht, daß, so lange Wasser im Vorratsbehälter aufgeheizt wird, durch die Leitung fließendes Brühwasser mit einer höheren Temperatur in den Auffangbehälter gelangt als das durch das Kaffeemehl fließende Brühwasser.

Dadurch, daß das Ende der Leitung auf den Rand der Aufbrüheinheit gerichtet ist und daß an dem Rand ein Kanal ausgebildet ist, der für das Brühwasser den anderen Weg bildet (Anspruch 8), kann auf eine zusätzliche Bauteile benötigende, gesonderte Führung des Brühwassers zum Auffangbehälter hin verzichtet werden. Dadurch läßt sich neben ästhetischen Vorteilen auch eine Kosteneinsparung erreichen.

Dadurch, daß für den Fall, daß ein wasserdurchlässiger Filtereinsatz in die Aufbrüheinheit eingesetzt ist, der Kanal durch die Außenseite des Filtereinsatzes und durch den inneren Rand der Aufbrüheinheit gebildet wird, wobei die Weite des Kanals durch Abstandselemente bestimmt wird und so bemessen ist, daß eine seitliche Benetzung der Zutat durch das Brühwasser auftritt (Anspruch 9), wird erreicht, daß das auf anderem Wege in den Auffangbehälter gelangende Brühwasser mit den seitlichen Randbereichen der Zutat in Kontakt gelangt. Insbesondere bei Kaffee ergibt dies den Vorteil, daß auch dieser Randbereich von Brühwasser besser extrahiert wird, da das über die erste Austrittsöffnung austretende Brühwasser kaum in den Randbereich des Kaffeemehls vordringt. Dabei werden kaum unerwünschte Anteile aus dem Kaffeemehl ausgelöst, da zum einen der Randbereich vorher kaum mit Brühwasser in Kontakt gekommen ist und zum anderen durch den erfindungsgemäßen Brühkopf ohnehin die Kontaktzeit zwischen Brühwasser und Kaffeemehl verkürzt wird. In praktischen Versuchen hat sich gezeigt, daß das sogenannte Konzentrat im Brühgetränk (verantwortlich für die Stärke des Kaffees) sich bei dieser Weiterbildung des erfindungsgemäßen Brühkopfes um 10-15 % steigern läßt. Dieser Effekt wird noch dadurch verstärkt, daß bei aus Papier bestehenden Filtereinsätzen auch das sich dort bei alleiniger Brühwasserzufuhr aus der ersten Austrittsöffnung ansammelnde Konzentrat ausgeschwemmt wird und daher nicht unverwertet bleibt.

Alle die vorgenannten Merkmale treten in besonderem Maße auf, wenn die Kontaktfläche zwischen dem aus der zweiten Austrittsöffnung austretenden Brühwasser und den Randbereichen des Kaffeemehls dadurch erheblich vergrößert werden, daß sich der Kanal über weite Bereiche oder vollständig entlang des Umfangs der Aufbrüheinheit erstreckt (Anspruch 10).

Um bei der Einleitung des Brühwassers aus der zweiten Austrittsöffnung in den Kanal einen gewissen Trichtereffekt zu erzielen, weist der Kanal eingangsseitig eine Auffangrinne auf, die dem freien Ende der Leitung gegenüberliegt (Anspruch 11). Dabei kann die Auffangrinne zur Aufnahme von stoßartig aus der zweiten Auslaßöffnung austretendem Brühwasser sich auch ganz oder teilweise längs des Umfangs der Filtereinheit erstrecken. Dadurch, daß der Kanal ausgangsseitig in die Auslaßöffnung der Aufbrüheinheit mündet, ergibt sich ein einziger Auslaß an der Aufbrüheinheit, was die Konstruktion des Auffangbehälters vereinfacht, da nur ein einziger Einlaß vorzusehen ist, wodurch sich darüber hinaus Wärmeverluste des Brühgetränks in Grenzen halten.

Ein Ausführungsbeispiel der Erfindung ist in der einzigen Zeichnung dargestellt und wird im folgenden näher beschrieben.

Die einzige Figur zeigt einen Längsschnitt durch ein Ausführungsbeispiel nach der Erfindung, wobei der andere Weg für das Brühwasser von einer Leitung mit siphonartigem Verlauf gebildet wird und wobei nur der Vorratsbehälter mit darunter angeordnetem Kaffeefilter einer Brühgetränkemaschine dargestellt ist.

In der einzigen Figur ist ein Ausschnitt einer Brühgetränkemaschine 1 dargestellt, die oberhalb einer Aufbrüheinheit 2 einen Vorratsbehälter 3 aufweist, an dessen Boden 4 eine elektrisch betriebene Heizeinrichtung 5 angeordnet ist. Der Vorratsbehälter 3 stellt somit mit der Heizeinrichtung 5 einen offenen Kessel dar, in dem eingefülltes Wasser zum Kochen gebracht werden kann. Die Heizeinrichtung 5 wird von einer kreisförmig verlaufenden Heizspirale 6 gebildet, die bei Einschalten eines in der Zeichnung nicht dargestellten Schalters der Brühgetränkemaschine mit elektrischer Energie versorgt wird.

Am Boden 4 außerhalb des Vorratsbehälters 3 ist weiterhin eine die Temperatur des Wassers des Vorratsbehälters 3 kontrollierende Temperatursteuereinrichtung 7 angeordnet, die, wenn das Wasser auf ausreichende Temperatur erhitzt ist, die elektrische Energieversorgung zur Heizspirale 6 unterbricht. Der Vorratsbehälter 3 weist eine Einfüllöffnung 8 auf, die von einem Deckel 9 verschließbar ist.

Am Boden 4 des Vorratsbehälters 3 ist weiterhin eine Öffnung 10 ausgebildet, die mit einem unterhalb des Bodens 4 angeordneten Auslaßventil 11 verbunden ist. Das Auslaßventil 11 wird von einem Thermostatventil gebildet, das erst dann öffnet, wenn das Wasser bei seiner Erhitzung eine vorgegebene Temperatur, vorzugsweise seine Siedetemperatur, erreicht hat. An das Auslaßventil 11 schließt sich ein Auslaßrohr 12 an, das, sobald das Auslaßventil 11 seine Offenstellung eingenommen hat, das Brühwasser auf die obere Fläche 53 einer in der Aufbrüheinheit 2 eingegebenen Zutat 13 abfließen läßt. Die Zutat 13 besteht vorzugsweise aus Kaffeemehl, das erst dann in die Aufbrüheinheit 2 eingegeben wird, wenn ein wasserdurchlässiger Filtereinsatz 14, vorzugsweise ein Papierfilter, in den nach unten konisch sich verjüngenden Aufnahmeraum 15 der Aufbrüheinheit 2 eingebracht wurde.

An dem Auslaßrohr 12 zweigt eine Leitung 16 ab, die einen siphonartigen Verlauf 18 aufweist, das heißt, die Leitung 16 erstreckt sich von ihrer unterhalb des Bodens 10 ausgebildeten Abzweigstelle 17 nochmals in den Raum des Vorratsbehälters 3 hinein, von wo sie dann aufgrund ihres siphonartigen Verlaufs 18 wieder zum Boden 4 zurückkehrt, diesen durchbricht und mit ihrem freien Ende 19 auf den oberen Rand 20 der Aufbrüheinheit 2 gerichtet ist. An den Stellen, wo die Leitung 16 den Boden 4 durchdringt, muß selbstverständlich die Leitung 16 gegenüber den am Boden 4 ausgebildeten Öffnungen 21, 22 dicht abgeschlossen sein.

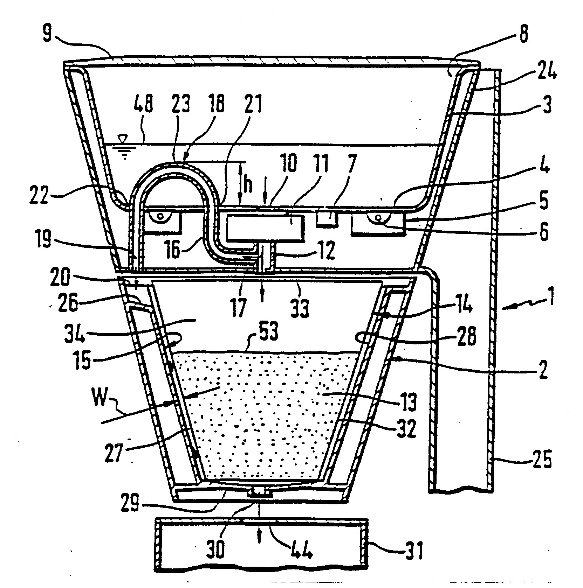

Der Scheitelpunkt 23 der siphonartigen Leitung 16 befindet sich in einer Höhe h, die etwa einer im Vorratsbehälter 3 vorhandenen Wassermenge von 20 % bis 40 % der vom Vorratsbehälter 3 maximal aufnehmbaren Kapazität an Wasser entspricht. Bei Verwendung einer flexiblen Leitung 16 und einer in Fig. 1 nicht dargestellten Höhenverstelleinrichtung kann der Scheitelpunkt 23 vom Benutzer auf verschiedene Höhen h eingestellt werden, sofern die Leitung 16 ausreichend lang bemessen ist.

Der Vorratsbehälter 3 ist in einer Umkleidung bzw. einem Gehäuse 24 eingebettet, das mit einem Standfuß 25 verbunden ist. Selbstverständlich ist es auch denkbar, daß die siphonartige Leitung 16 auch außerhalb des Vorratsbehälters 3 in gleicher Weise verläuft. Das freie Ende 19 der siphonartigen Leitung 16 kann, wenn dies erforderlich ist, mit einer den Durchfluß des Wassers steuernden Ventileinrichtung versehen sein, die aber in der Zeichnung nicht dargestellt ist.

Senkrecht unterhalb des freien Endes 19 ist am Rand 20 der Aufbrüheinheit 2 eine Auffangrinne 26 ausgebildet, die das am freien Ende 19 austretende Brühwasser auffängt und einem am Rand 20 der Aufbrüheinheit 2 ausgebildeten Kanal 27 zuführt, von wo es zwischen Filtereinsatz 14 und der Wandung 28 der Aufbrüheinheit 2 bis zu deren Boden 29 geleitet wird, an der es dann gemeinsam mit dem durch die obere Fläche 53 der Zutat 13 eingetretenen Brühwasser an der Auslaßöffnung 30 ausströmt. An der Auslaßöffnung 30 fließt dann das fertige Brühgetränk in einen unterhalb der Auslaßöffnung 30 ausgebildeten Auffangbehälter 31 ein.

Die Auffangrinne 26 kann als örtlich ausgebildete Vertiefung im Rand 20 ausgebildet sein, wie in den Fign. 1 und 2 dargestellt; sie kann aber auch als teilweise oder ganz in dessen inneren Umfang der Filtereinheit 2 verlaufende, ringförmig ausgebildete Rinne bestehen, die zusätzlich noch, vom Einlauf ausgehend, ein Gefälle aufweisen kann. Der Kanal 27 entsteht dadurch, daß die Außenfläche des Filtereinsatzes 14 gegen an der Wandung 28 hervorstehende Rippen 32 anliegt. Die Rippen 32 wirken insbesondere bei Einsatz eines Papierfilters als Abstandselemente. Damit wird der Kanal 27 einerseits gebildet durch die Außenseite des Filtereinsatzes 14 und der inneren Wandung 28 der Aufbrüheinheit 2 und andererseits durch die Abstandselemente 32 selbst. Bei Verwendung einer entsprechenden Anzahl von Abstandselementen 32 längs der Wandung 28 können eine Vielzahl von Kanälen 27 für das aus dem Ende 19 der Leitung 16 austretende Brühwasser geschaffen werden. Bei Verwendung eines formfesten Filtereinsatzes 14, beispielsweise eines siebartigen Metallfilters, genügen bereits wenige Abstandselemente 32, um einen rund um die Aufbrüheinheit 2 verlaufenden Kanal mit genau definierter Weite W zu schaffen.

Der Kanal 27 weist eingangsseitig eine Auffangrinne 26 auf, die stoßweise aus der Leitung 16 austretendes Brühwasser auffängt. Für den Fall, daß entlang des Umfangs der Aufbrüheinheit 2 mehrere Kanäle 27 ausgebildet sind oder ein einziger durchgehender Kanal 27 vorhanden ist, erstreckt sich auch die Auffangrinne 26 in entsprechender Weise entlang des Umfangs der Aufbrüheinheit 2.

Die Aufbrüheinheit 2 kann an der Unterseite 33 des Gehäuses bzw. der Umkleidung 24 herausnehmbar befestigt sein.

Wie aus der einzigen Figur zu erkennen ist, steht das obere freie Ende des Papierfilters 14 geringfügig über die Auffangrinne 26 hinaus, damit, wenn Brühwasser über die Leitung 16 fließt, dieses nicht in das Innere 34 des Papierfilters 14 gelangt. Allerdings darf der Papierfilter 14 nicht soweit nach oben hervorstehen, daß auf die Auffangrinne 26 fließendes Wasser den Papierfilter 14 nach innen zusammenfallen läßt.

Die Wirkungsweise der Brühgetränkemaschine ist folgende:

Wird bei der Brühgetränkemaschine 1 in den Vorratsbehälter 3 kaltes Wasser eingefüllt, deren Füllstand durch den Pegelstand angezeigt wird, so ist deutlich zu erkennen., daß der Pegelstand 48 oberhalb des Scheitelpunktes 23 der siphonartig verlaufenden Leitung 16 liegt. Sobald der Hauptschalter (nicht dargestellt) der Brühgetränkemaschine 1 eingeschaltet wird, startet die Heizeinrichtung 5, da die Temperatursteuereinrichtung 7 kurzgeschlossen ist. Nun heizt sich das Wasser im Vorratsbehälter 3 solange auf, bis es anfängt zu kochen, bzw. bis die gewünschte Temperatur erreicht ist. Ab diesem Punkt unterbricht die Temperatursteuereinrichtung 7 den Strom zu der Heizspirale 6. Gleichzeitig öffnet das Auslaßventil 11 und Brühwasser läuft über das Auslaßrohr 12 auf die obere Fläche 53 der Zutat 13 in die Brüheinheit 2.

Da der Pegelstand 48 des Brühwassers oberhalb des Scheitelpunktes 23 der Leitung 16 liegt, fließt auch Brühwasser durch die Leitung 16 und über das freie Ende 19 in die Auffangrinne 26 der Brüheinheit 2. Bei entsprechender Wahl der Querschnitte von Auslaßrohr 12 und Leitung 16 wird sichergestellt, daß am Eingang der Leitung 16 ein ausreichender Druck anliegt, um Brühwasser über die Leitung 16 fließen zu lassen.

Die Abzweigstelle 17 der Leitung 16 kann auch direkt am Boden 4 des Vorratsbehälters 3 mit einen eigenen temperaturgesteuerten Ventil (nicht dargestellt) verbunden sein, so daß die Brühwasserabgabe, die sonst über die Leitung 16 erfolgt, nicht über das Ventil 11 sondern über einen eigenen Anschluß am Vorratsbehälter 3 erfolgt.

Die Brühwassermenge, die mit der oberen Fläche 53 der Zutat 13 in Berührung kommt, extrahiert beispielsweise aus Kaffee die Extraktionsstoffe und fließt dann an der Auslaßöffnung 30 über den Einlaß 44 in den Auffangbehälter 31. Gleichzeitig fließt aber auch Brühwasser über den als Bypass ausgebildeten Kanal 27 zur Auslaßöffnung 30. Dieser Brühwasseranteil, der bei einem wasserdurchlässigen Filtereinsatz 14 von der Seitenfläche des Kaffeemehls 13 her mit diesem in Kontakt kommt, führt zu einer wirksamen Extraktion dieses Kaffeemehlbereiches, die bei einer alleinigen Brühwasserzuführung über die obere Fläche 53 nicht in diesem Maße eintreten kann. Hierdurch kann man bei der Zubereitung von Kaffee einer gewünschten Stärke mit weniger Kaffeemehl 13 auskommen. Dabei kommt es praktisch kaum zu einer Extraktion von unerwünschten Geschmacksstoffen, da die Kontaktzeiten zwischen Kaffeemehl 13 und Brühwasser durch den als Bypass wirkenden Kanal 27 verringert wird.

Durch den getrennten Abfluß des Brühwassers aus dem Vorratsbehälter 3 wird nämlich ein geringer Anteil von Brühwasser über die obere Fläche 53 der Zutat 13 geleitet, als wenn die Leitung 16 nicht vorhanden wäre. Hierdurch wird die Zutat 13 während einer kürzeren Zeit mit Brühwasser beaufschlagt, so daß Bitterstoffe und sonstige das Brühgetränk nachteilig beeinträchtigende Zutaten nicht extrahiert werden. Das den Kanal 27 duchströmende Brühwasser läuft unter Extraktion der Zutat 13 im oberen Randbereich des Papierfilters ebenfalls an der Auslaßöffnung 30 aus der Aufbrüheinheit 2 aus und vermischt sich dabei mit dem extrahierenden Brühgetränk.

Je höher der Pegelstand 48 ist, desto mehr Anteile des Brühwassers fließen über die Leitung 16 und den Kanal 27. Dieser Brühwasseranteil kann etwa 10 bis 40 % betragen, je nach dem, welcher Pegelstand 48 im Vorratsbehälter 3 vorhanden ist.

Ist der Pegelstand 48 unterhalb des Scheitelpunkts 23, so fließt überhaupt kein Brühwasser über die Leitung 16, das heißt, das ganze Brühwasser muß die Zutat 13 über dessen obere Fläche 53 passieren. Da in diesem Fall aber die Extraktionszeit, das heißt, die Zeit, mit der die Zutat 13 mit Brühwasser in Kontakt steht, noch relativ gering ist, werden aus der Zutat 13 unerwünschte Stoffe nur in geringen Maße extrahiert.

Ist der Filtereinsatz 14 in den Seitenbereichen des Kaffeemehls 13 nicht wasserduchlässig, so wird mit dem durch den Kanal 27 fließenden Brühwasseranteil zwar keine Extraktionswirkung erzielt, es bleibt aber nach wie vor bei der vorteilhaften Verkürzung der Kontaktzeit zwischen dem Brühwasser und dem Kaffeemehl durch die Bypasswirkung des Kanals 27 in Verbindung mit der Leitung 16.

## Patentansprüche

1. Brühgetränkemaschine (1) mit einem einen Boden (4) aufweisenden Vorratsbehälter (3), in welchem Wasser von einer elektrischen Heizeinrichtung (5) erhitzt werden kann, und mit einem Auslaßventil (11), welches erst bei Erreichen einer bestimmten Wassertemperatur seine Offenstellung einnimmt, wonach Brühwasser aus dem Vorratsbehälter (3) auf die obere Fläche (53) einer Zutat (13), vorzugsweise Kaffeemehl oder Teeblätter, fließt, die in einer Aufbrüheinheit (2) enthalten ist, aus der nach Extrahierung der Zutat (13) das so hergestellte Brühgetränk schließlich in einen Auffangbehälter (31) abfließt, wobei die Brühgetränkemaschine (1) eine Leitung (16) aufweist, über die Brühwasser auch über einen anderen Weg (27) als über die obere Fläche (53) der Zutat (13) aus dem Vorratsbehälter (3) in den Auffangbehälter (31) gelangen kann,
**dadurch gekennzeichnet,**
daß die Leitung (16) einen durch die Lage ihres Scheitelpunktes (23) und ihres freien Endes (19) gekennzeichneten siphonartigen Verlauf (18) aufweist, daß der Scheitelpunkt (23) der Leitung (16) so weit oberhalb des Bodens (4) des Vorratsbehälters (3) liegt, daß erst ab einem bestimmten Füllstand im Vorratsbehälter (3) Brühwasser auch über die Leitung (16) und nicht nur über die obere Fläche (53) der Zutat (13) abfließt.

2. Brühgetränkemaschine nach Anspruch 1,
**dadurch gekennzeichnet,**
daß die siphonartige Leitung (16) aus flexiblem Material besteht und ausreichend lang bemessen ist, so daß der Scheitelpunkt (23) der Leitung (16) in bezug auf den Boden (4) des Vorratsbehälters (3) vom Benutzer der Brühgetränkemaschine (1) in verschiedene Höhen gebracht werden kann.

3. Brühgetränkemaschine nach Anspruch 1,
**dadurch gekennzeichnet,**
daß erst ab einem Füllstand von ca. 20 % bis 40 % der maximalen Kapazität an Wasser im Vorratsbehälter (3) Brühwasser auch über die Leitung (16) läuft.

4. Brühgetränkemaschine nach Anspruch 3,
**dadurch gekennzeichnet,**
daß dem Auslaßventil (11) ein Auslaßrohr (12) nachgeschaltet ist, daß der Durchlaßquerschnitt der siphonartigen Leitung (16) gegenüber dem Gesamtdurchlaßquerschnitt aus Leitung (16) und Auslaßrohr (12) etwa zwischen 35 % und 50 % beträgt.

5. Brühgetränkemaschine nach Anspruch 1,
**dadurch gekennzeichnet,**
daß die Leitung (16) mit einer den Durchfluß des Brühwassers steuernden Ventileinrichtung versehen ist, die aber immer einen Mindestdurchfluß garantiert.

6. Brühgetränkemaschine nach Anspruch 5,
**dadurch gekennzeichnet,**
daß die Ventileinrichtung vom Benutzer der Brühgetränkemaschine (1) in solchen Grenzen verstellt werden kann, daß bei ausreichendem Füllstand (48) nach der Öffnung des Auslaßventils (11) 10 % bis 40 % des Brühwassers durch die siphonartige Leitung (16) abfließen.

7. Brühgetränkemaschine nach Anspruch 1,
**dadurch gekennzeichnet,**
daß die Leitung (16) sich durch den Vorratsbehälter (3) erstreckt.

8. Brühgetränkemaschine nach Anspruch 1,
**dadurch gekennzeichnet,**
daß das Ende (19) der Leitung (16) auf den inneren Rand (20) der Aufbrüheinheit (2) gerichtet ist und daß an dem inneren Rand (20) ein Kanal (27) ausgebildet ist, der für das Brühwasser den anderen Weg bildet.

9. Brühgetränkemaschine nach Anspruch 8,
**dadurch gekennzeichnet,**
daß für den Fall, daß ein wasserdurchlässiger, die Zutat (13) enthaltender Filtereinsatz (14) in die Aufbrüheinheit (2) eingesetzt ist, der Kanal (27) durch die Außenseite des Filtereinsatzes (14) und durch den inneren Rand (20) der Aufbrüheinheit (2) gebildet wird, wobei die Weite (W) des Kanals (27) durch Abstandselemente (32) bestimmt wird und so bemessen ist, daR eine seitliche Benetzung der Zutat (13) durch das Brühwasser auftritt.

10. Brühgetränkemaschine nach Anspruch 5,
**dadurch gekennzeichnet,**
daß sich der Kanal (27) über weite Bereiche oder vollständig entlang des Umfangs am inneren Rand (28) der Aufbrüheinheit (2) erstreckt.

11. Brühgetränkemaschine nach Anspruch 8,
**dadurch gekennzeichnet,**
daß der Kanal (27) eingangsseitig eine Auffangrinne (26) aufweist, die unterhalb der Oberkante (20) des Filtereinsatzes (14) verläuft und die dem freien Ende (19) der Leitung (16) gegenüberliegt und ausgangsseitig in die Auslaßöffnung (30) der Aufbrüheinheit (2) mündet.

## Claims

1. A beverage brewing machine (1) comprising a supply reservoir structure (3) having a bottom (4) and being adapted to receive water to be heated by an electric heating device (5), an outlet valve structure (11) which does not occupy its open position until the water is heated to a predetermined temperature whereupon brewing water flows from the supply reservoir structure (3) onto the upper surface (53) of a product (13), preferably coffee grinds or tea leaves, contained in a brewing structure (2), from which, after extraction of the product (13), the so prepared brew finally discharges into a collection container (31), said beverage brewing machine (1) including a conduit structure (16) through which brewing water can propagate from the supply reservoir structure (3) along a path (27) other than through the upper surface (53) of the product (13) to reach the collection container (31),
**characterized in that** the conduit structure (16) follows a siphon-like course (18) defined by the position of its vertex (23) and its free end (19), that the vertex (23) of the conduit structure (16) is disposed at a level above the bottom (4) of the supply reservoir structure (3), such that brewing water discharges also through the conduit structure (16) and not only through the upper surface (53) of the product (13) not until the water in the supply reservoir structure (3) is at a predetermined filling level.

2. The beverage brewing machine as claimed in claim 1,
**characterized in that** the siphon-like conduit structure (16) is made of a flexible material and dimensioned sufficiently long to enable the user of the beverage brewing machine (1) to adjust the vertex (23) of the conduit structure (16) to various levels in relation to the bottom (4) of the supply reservoir structure (3).

3. The beverage brewing machine as claimed in claim 1,
**characterized in that** brewing water flows also through the conduit structure (16) not until the water in the supply reservoir structure (3) is filled to a level of about 20% to 40% of its maximum capacity.

4. The beverage brewing machine as claimed in claim 3,
**characterized in that** an outlet pipe structure (12) is connected downstream from the outlet valve structure (11), and that the cross-section of passage of the siphon-like conduit structure (16) is between 35% and 50%, approximately, of the combined cross-sections of passage of the conduit structure (16) and the outlet pipe structure (12).

5. The beverage brewing machine as claimed in claim 1,
**characterized in that** the conduit structure (16) is provided with a valve structure controlling the passage of the brewing water while yet ensuring a minimum passage.

6. The beverage brewing machine as claimed in claim 5,
**characterized in that** the valve structure is adjustable by the user of the beverage brewing machine (1) within such limits that in the presence of a sufficient filling level (48) following opening of the outlet valve structure (11) 10% to 40% of the brewing water is discharged through the siphon-like conduit structure (16).

7. The beverage brewing machine as claimed in claim 1,
**characterized in that** the conduit structure (16) extends through the supply reservoir structure (3).

8. The beverage brewing machine as claimed in claim 1,
**characterized in that** the end (19) of the conduit structure (16) is directed to the inner edge (20) of the brewing structure (2), and that on said inner edge (20) a channel structure (27) is formed providing the other path for the brewing water.

9. The beverage brewing machine as claimed in claim 8,
**characterized in that**, in cases where a water-permeable filter insert (14) containing the product (13) is inserted in the brewing structure (2), the channel structure (27) is formed by the outside of the filter insert (14) and by the inner edge (20) of the brewing structure (2), with the width (W) of the channel structure (27) being determined by a spacer structure (32) dimensioned such that the product (13) has its sides wetted by the brewing water.

10. The beverage brewing machine as claimed in claim 5,
**characterized in that** the channel structure (27) extends over large areas, or completely along the circumference, of the inner edge (28) of the brewing structure (2).

11. The beverage brewing machine as claimed in claim 8,
**characterized in that** the channel structure (27) includes on its inlet side a collecting groove structure (26) which extends beneath the upper edge (20) of the filter insert (14) and which is opposite the free end (19) of the conduit structure (16) and, on the outlet side, terminates into the outlet opening (30) of the brewing structure (2).

## Revendications

1. Machine à boissons chaudes (1) contenant un réservoir de stockage (3) avec un fond (4) dans lequel on peut chauffer de l'eau, avec une installation de chauffage électrique (5), et une soupape de sortie (11) qui s'ouvre seulement lorsque l'eau a atteint une certaine température, après quoi l'eau chaude s'écoule du réservoir de stockage (3) sur la surface (53) d'un ingrédient (13), de préférence du café moulu ou des feuilles de thé. Cet ingrédient est contenu dans une unité de chauffage (2) à partir de laquelle la boisson chaude s'écoule dans un récipient de réception (31) après l'extraction de l'ingrédient (13), la machine à boissons chaudes (1) ayant une conduite (16) à travers laquelle l'eau chaude peut passer du réservoir de stockage (3) au récipient de réception (31) par une autre voie (27) que celle passant par la surface (53) de l'ingrédient (13)
caractérisé en ce que,
la conduite (16) présente l' allure d'un siphon (18) caractérisée par la position de son sommet (23) et par son bout libre (19), en ce que le sommet (23) de la conduite (16) se trouve à une telle hauteur au-dessus du fond (4) du réservoir de stockage (3) que c'est seulement à partir d'un certain niveau de remplissage atteint dans le réservoir de stockage (3) que l'eau chaude s'écoule aussi par la conduite (16) et non seulement par la surface (53) de l'ingrédient (13).

2. Machine à boissons chaudes selon la revendication 1,
caractérisée en ce que
la conduite sous forme d'un siphon (16) consiste en une matière flexible et en ce qu'elle est suffisamment longue pour que l'utilisateur de la machine à boissons chaudes (1) puisse ajuster le sommet (23) de la conduite (16) à des niveaux différents par rapport au fond (4) du réservoir de stockage (3).

3. Machine à boissons chaudes selon la revendication 1,
caractérisée en ce que
l'eau chaude ne commence à passer par la conduite (16) qu'à un niveau de remplissage d'environ 20% à 40% de la capacité maximum du réservoir de stockage (3).

4. Machine à boissons chaudes selon la revendication 3,
caractérisée en ce que
la soupape de sortie (11) se trouve en aval d'un tuyau de décharge (12) et en ce que la section transversale de passage de la conduite sous forme de siphon (16) est de 35% à 50 % par rapport à la section totale de la conduite (16) et du tuyau de décharge (12) ensemble.

5. Machine à boissons chaudes selon la revendication 1,
caractérisée en ce que
la conduite (16) est pourvue d'une soupape qui commande le passage de l'eau chaude et qui garantit toujours un débit minimum.

6. Machine à boissons chaudes selon la revendication 5,
caratérisée en ce que
cette soupape peut être ajustée par l'utilisateur de la machine à boissons chaudes (1) de sorte qu'à un niveau de remplissage suffisant (48) entre 10% et 40 % de l'eau chaude peuvent s'écouler à travers la conduite sous forme de siphon (16) après l'ouverture de l'orifice de la soupape de sortie (11).

7. Machine à boissons chaudes selon la revendication 1,
caratérisée en ce que
la conduite (16) passe à travers le réservoir de stockage (3).

8. Machine à boissons chaudes selon la revendication 1,
caractérisée en ce que
le bout (19) de la conduite (16) est tourné vers le bord intérieur (20) de l'unité de chauffage (2) et qu'au bord intérieur (20) il y a un canal (27) qui constitue la voie alternative pour l'eau chaude

9. Machine à boissons chaudes selon la revendication 8,
caractérisée en ce que
si l'unité de chauffage (2) contenient une cartouche filtrante (14) imperméable contenant l'ingrédient (13) le canal (27) sera formé par l'extérieur de la cartouche filtrante (14) et par le bord intérieur (20) de l'unité de chauffage (2), la largeur (W) du canal (27) étant déterminée par des éléments d'écartement (32) et dimensionnée de sorte que l'ingrédient (13) soit humidifié latéralement par l'eau chaude.

10. Machine à boissons chaudes selon la revendication 5,
caractérisée en ce que
le canal (27) s'étend sur la plus grande partie de la circonférence du bord intérieur (28) de l'unité de chauffage (2) ou sur toute la longueur de celle-ci.

11. Machine à boissons chaudes selon la revendication 8,
caractérisée en ce que
le canal (27) est pourvu d'une rainure de réception (26) du côté de l'entrée, qui passe au-dessous du bord supérieur (20) de la cartouche filtrante (14) et qui se trouve face au bout libre (19) de la conduite (16) et aboutit dans l'orifice de sortie (30) de l'unité de chauffage (2) du côté de la sortie.
